# EUROPEAN PATENT APPLICATION

(11) **EP 3 913 741 A1**
(43) Date of publication of application: **24.11.2021**
(21) Application number: 20176083.2
(22) Date of filing: 22.05.2020
(51) Int. Cl.: H01Q 1/24, G01K 11/00, H01Q 9/04, H01Q 21/06, H01Q 21/24, H01Q 21/28, H01Q 1/28

(54) **PORTABLE LOW-MASS AND LOW-POWER MICROWAVE RADIOMETER WITH RADIOMETER ANTENNA AND RADIOMETER ELECTRONICS**

(71) Applicant: Eidg. Forschungsanstalt für Wald, Schnee und Landschaft WSL, 8903 Birmensdorf (CH)
(72) Inventor: Houtz, Derek, 8047 Zürich (CH)
(74) Representative: Prins Intellectual Property AG

(57) **Abstract**

The disclosed invention shows a portable stable low-mass microwave radiometer (0) for measuring microwaves in the spectral range between 1 and 300 GHz, comprising at least one patch array antenna (1) and a connected suitable electronics (2) with radio-frequency components and signal processing components, allowing more stable and more accurate measurements of brightness temperature while in particular mounted on an unmanned aerial vehicle (UAV). This is reached with a patch array antenna (1) comprising at least one patch array (10, 10') with a patch substrate layer (100, 100') of a dielectric material with a pattern of an even number of printed patches (101, 101') on a front side is printed, while printed patches (101, 101') are connected via inset-feds to striplines, wherein connector lines are connected to the striplines to be led from a backside of the patch substrate layer (100, 100') to and through a ground conductor layer (108, 108'), which is fixed to the backside of the patch substrate layer (100, 100') in a defined distance (d, d') forming an air gap (106, 106') between both layer (100, 100', 108, 108') by a multiplicity of spacers (107, 107').

## Description

### TECHNICAL FIELD

The present invention describes a portable stable low-mass microwave radiometer for measuring microwaves in the spectral range between 1 and 300 GHz, comprising at least one patch array antenna and a connected suitable electronics with radio-frequency components and signal processing components.

### STATE OF THE ART

Low-mass low-power microwave radiometer sensing natural emission in the passive-protected microwave spectrum of 1400-1427 MHz are known, produced by a few companies/university spinoffs.

These three groups are:
(1) Balamis (https://www.balamis.com/) coming out of the Technical University of Catalonia, Spain;
(2) The Soil Moisture Company (http://thesoilmoisturecompany.com/) a joint venture between an unmanned aerial vehicle (UAV) company Blackswift technologies and the Center for Environmental Technology at the University of Colorado, USA; and
(3) Skaha Remote Sensing, a private company coming out of British Columbia, Canada.

These groups have each developed compact L-band radiometers capable of air-borne measurement from UAVs, but their designs incorporate less-stable electronics, questionable calibrations, and larger heavier inferior antennas by comparison with our invention presented in the description part.

The Soil Moisture Company's design uses a fixed-wing unmanned aircraft. The lack of look-angle control in combination with brightness temperature's high angular dependence makes the fixed wing solution quite difficult to implement for accurate retrievals of ground properties. The design also relies on a constant view of sky to measure the different between ground and sky ("differential correlating").

Multiple motors and RF remotes operating on multi-rotor UAVs create a dynamic electromagnetic field environment that can disrupt the sensitive radiometer. The UAV-borne versions of Balamis and Skaha's radiometers are highly effected by this radiofrequency interference (RFI) from the drone itself. Use of a "digital backend", such as those used on all of these systems, allows post-processing and filtering, but also is prone to instability due to local-oscillator drift. Reliance on digital filtering also may cause RFI to saturate amplifiers and compromise the signal before it reaches the backend.

The antennas used in the state-of-the-art systems so far utilize (1) standard patch antenna, (2) colinear dipole array, (3) circular polarized patch array/backfire antenna, which are determined from pictures, videos and documentation available on these products of the groups mentioned above.

Standard patch or patch arrays will have lower gain and higher loss (lower efficiency) than the antenna introduced with this invention. The antennas used in the state-of-the-art normally provide non-symmetric antenna patterns. Non-symmetric antenna patterns result in elongated elliptical ground pixels in the resulting data. The state-of-the-art either uses single polarization (2), or dual polarization with the same antenna (1) and (3).

Measuring two polarizations with the same antenna causes correlation and cross-talk which can make it difficult or impossible to obtain two independent orthogonal linear polarized measurements required by most retrieval algorithms.

With regards to Acevo-Herrera R, Aguasca A, Bosch-Lluis X, Camps A, Martínez-Fernández J, Sánchez-Martín N, Pérez-Gutiérrez C. Design and first results of an UAV-borne L-band radiometer for multiple monitoring purposes. Remote Sensing. 2010 Jul;2(7): 1662-79; and Acevo-Herrera R, Aguasca A, Bosch-Lluis X, Camps A. On the use of compact L-band dicke radiometer (ARIEL) and UAV for soil moisture and salinity map retrieval: 2008/2009 field experiments. In 2009 IEEE International Geoscience and Remote Sensing Symposium 2009 Jul 12 (Vol. 4, pp. IV-729). IEEE, this radiometer uses a single polarization at nadir incidence, providing too little information for reliable soil moisture retrieval.

Other types of antennas that have been considered for radiometry include; horn antennas, collinear arrays, dual feed dual polarization patch arrays, and circular arrays. Horn antennas are much too large and massive to be flown on a UAV or considered portable. The other antenna designs also have disadvantages, mainly concerning their total weight and resolution.

The closest prior art found is CA2916617, which discusses a combined active/passive UAV-borne radar/radiometer with improved resolution. The concept is based on software defined radios (SDRs). The system described in this patent application has a number of disadvantages in comparison to the invention proposed. Concerning the radiometer electronics, no front-end bandpass filter was described, although the ability to filter RFI from the cross-correlation function exists with SDRs, if the RFI saturates the LNA, the data will be unusable. The problem concerning drift associated with the SDR local oscillator (LO) as mentioned previously, is not solved in CA2916617. Additionally, the design of the antenna is not explicitly described, it only mentions an antenna "surpassing patch antennas" and mentions a possible mesh backfire antenna, which has not yet been demonstrated, and has known disadvantages. It is doubtful whether the described apparatus can be moved sufficiently well by a drone.

### DESCRIPTION OF THE INVENTION

The object of the present invention is to create an overall lightweight radiometer, with an improved highly-efficient and directional low-mass antenna and/or an optimized radiometer electronics, allowing more stable and more accurate measurements of brightness temperature, especially detectable from an unmanned aerial vehicle (UAV) such as a multi-copter drone. The complete radiometer with low-mass antenna can also be mounted on weather stations, ground vehicles, etc. Advantages can be reached by introducing the radiometer electronics and highly-efficient and directional low-mass antenna, which together form the radiometer. While they could be used with other electronics and antennas, herein low-mass means masses below 5 kilograms for the complete radiometer.

The new patch array antenna uses air as a substrate material instead of a printed circuit board of a dielectric material as is typically done with patch antennas. Due to this new antenna design, a 37 degree half power full antenna beamwidth provides a far superior resolution.

The invention comprises a low-mass low-power microwave radiometer electronics optimized for sensing natural emission in the passive-protected microwave spectrum of 1400-1427 MHz. The dual-polarization brightness temperatures measured by the invention can be used with established retrieval algorithms to extract parameters such as: soil moisture, snow wetness, snow density, sea-surface-salinty, biomass in forests, internal ice temperature of glaciers, moisture content in construction materials (e.g. concrete), etc.

The design of our radiometer electronics uses multiple analog bandpass filter stages on the front-end to eliminate unwanted emissions from the motor, and also utilizes a high sampling rate of the detector to filter time-dependent spurious RFI signals.
Direct-detection is performed with a square-law power detector, as part of the radiometer electronics, which eliminates the need for a local-oscillator and guarantees that the correct frequency is being detected by the measured response of the passive analog filters.
The electronics are further optimized by using internal calibration, eliminating the need for sky viewing, which also provides a better resolution, than known from prior art.

Commercially, such described radiometers can be used by agriculture companies that develop tools for farmers, natural disaster prediction and modelling professionals, and in general by scientific research and aerospace agencies. Microwave brightness temperature data converted to maps of soil moisture would be used to feed into irrigation schedules to optimize water use efficiency and increase yield by decreasing crop stress. Soil moisture is a main input to land-slide and debris flow models that attempt to predict these natural disasters. The end users could be governments, insurance companies, or researchers in this field.

### BRIEF DESCRIPTION OF THE DRAWINGS

Further understanding of various aspects of the invention can be obtained by reference to the following detailed description in conjunction with the associated drawings, which are described briefly below.
It should be noted that in the differently described embodiments, the same parts are provided with the same reference symbols or the same component names, the disclosures contained in the entire description being able to be applied analogously to the same parts with the same reference symbols or the same component symbols.

A preferred exemplary embodiment of the subject matter of the invention is described below in conjunction with the attached drawings.
- Figure 1a: shows a schematic top view of a radiometer with an electronic and a patch array antenna, wherein the patch array antenna comprises two connected patch arrays, detecting different polarized microwave radiation, while
- Figure 1b: shows a schematic side view of the patch array antenna and the electronics, wherein the patch array antenna is scaled in height to better show an air gap.
- Figure 2: shows a schematic diagram of the electronics and the patch array antenna, wherein the direction of signal transmission is indicated by a dotted line with arrows from input to a computer unit.

### DESCRIPTION

In the following a low-mass low-power microwave radiometer 0 and its components are described for sensing natural emission in the passive-protected microwave spectrum of 1400-1427 MHz in the L-band (IEEE) of the UHF range. The radiometer 0 in general comprises a radiometer electronics 2 and an antenna 1, which are connected in operation state and could each be operated with different electronics or antenna, whereby their combination gives the best possible results, as measurements showed. Stable and accurate low-mass, low-volume, and low-power microwave radiometer 0 in a small package, allowing high gain, directionality of microwave detection and low-loss accurate radiometry is possible due to new radiometer electronics 2 and/or new design of the antenna 1. The most important use will be measurements of soil moisture.

Resulting microwave brightness temperature data, converted to maps of soil moisture, can be used to feed into irrigation schedules to optimize water use efficiency and increase yield by decreasing crop stress. L-band radiometers are often used in research for snow-melt detection, soil physics studies, sea salinity, and many other applications. Drone-based mapping of L-band brightness temperatures will also be useful for satellite downscaling studies, vegetation optical depth investigations, and many other L-band retrieval parameters under current development.

Passive radiometry requires a highly efficient antenna 1 in order to accurately measure microwave brightness temperatures of the scene, rather than measuring the physical temperature of the antenna 1 itself.

A new antenna 1 was created for receiving radiation in microwave range. The antenna 1 comprises two patch arrays 10, 10'. Each patch array 10, 10'comprises a sandwich structure of a patch substrate layer 100, 100', an air gap 106, 106' and a ground conductor layer 108, 108', wherein the ground conductor layer 108, 108' is separated by the air gap 106, 106' about a distance d, d'. Such distance d, d', respectively the air gap 106, 106', is reached by a multiplicity of spacers 107, 107', located between patch substrate layer 100, 100' and ground conductor layer 108, 108'. The ground conductor layer 108, 108' could be produced as PCB with a grounding metal layer or could be made entirely of metal.

By introducing the air gap 106, 106' instead of a commonly known PCB dielectric material layer, larger printed patches 101, 101' can be used and signal loss can be avoided, as comparative measurements and simulations showed.

For the air gap 106, 106', best results were achieved with distances d, d' between 5 mm and 9 mm, in particular 6 mm. Such air gaps 106, 106' are optimized for radiometry in L-band as described here. The parameter range was simulated for the used frequency and dimension of patch array antenna 1 parts to tune to the highest efficiency, or smallest loss. It is important, that the spacers 107, 107' are electrically non-conducting and the connection means 105, 105' too. The spacer 107, 107' can be formed by polymers, like Teflon or PTFE, polyamides or Nylon or Silicone.

A multiplicity of connection means 105, 105' is used to connect separated ground conductor layer 108, 108' and patch substrate layer 100, 100'. The preferred connection means 105, 105' are plastic screws, for example made of polyamides such as Nylon. For the sake of simplicity, the connection means 105, 105' are operatively connected with the spacers 107, 107' in the same positions. But connection means 105, 105' could also be formed by a glued joint.

On a top side of the patch substrate layer 100, 100', usually a printed circuit board, an even number of printed patches 101, 101' is placed, on the top side opposite the ground conductor layer 108, 108'. The shapes of the printed patches 101, 101' are preferably identical, as well as the number of patches 101, 101' of both patch arrays 10, 10'.

Each printed patch 101, 101' is connected via an insed-fed 102, 102'to striplines 103, 103' running symmetrically along the patch array surface to a centred RF coaxial connector 104, 104', in particular for L-band a SMA connector (SubMiniature version A) or type-N connector. At high frequencies SMA must be replaced with smaller precision coaxial connectors. The size and form of the patches 101, 101' is adapted or optimized to the microwave frequency to be received. Persons skilled know how to simulate and produce such printed patches 101, 101' and their inset-feeds 102, 102' on patch substrate layer 100, 100' surfaces, to optimize for microwave frequency range of interest. The complex multilayered sandwich with patch substrate layer 100, 100', air gap 106, 106' and ground conductor layer 108, 108' introduced here cannot be described and solved with analytical equations. The design needs to be tuned using electromagnetic finite-element software simulations and build/test iteration to obtain the dimensions necessary for the antenna to operate in the passive-sensing protected band between 1400 and 1427 MHz, here the center frequency of the designed antenna 1 is 1413 MHz.

The printed patches 101, 101' are connected via the striplines 103, 103' as a matched micro-strip feed network, connector lines 1030, 1030' to the RF coaxial connector 104, 104' and their coaxial center conductor 1040 by wires at the radiometer electronics 2.

The connector lines 1030, 1030' are fed through the patch substrate layer 100, 100' to be connected to the striplines 103, 103'. The connection between connector lines 1030, 1030' and the RF coaxial connector 104, 104' is done by soldering. In the radiometer electronics 2 the further signal processing, calibration and analysis are performed.

As measurements showed, the patch array 10, 10' showing improved results, high gain, high efficiency, and is extremely lightweight. Improvements can be achieved with different electronics used.
As an option for further improvement, at least one not shown temperature sensor can be arranged at the patch array 10, 10' for improvement in later temperature calibration in the electronics. The temperature sensor is to be connected accordingly with the electronics 2.

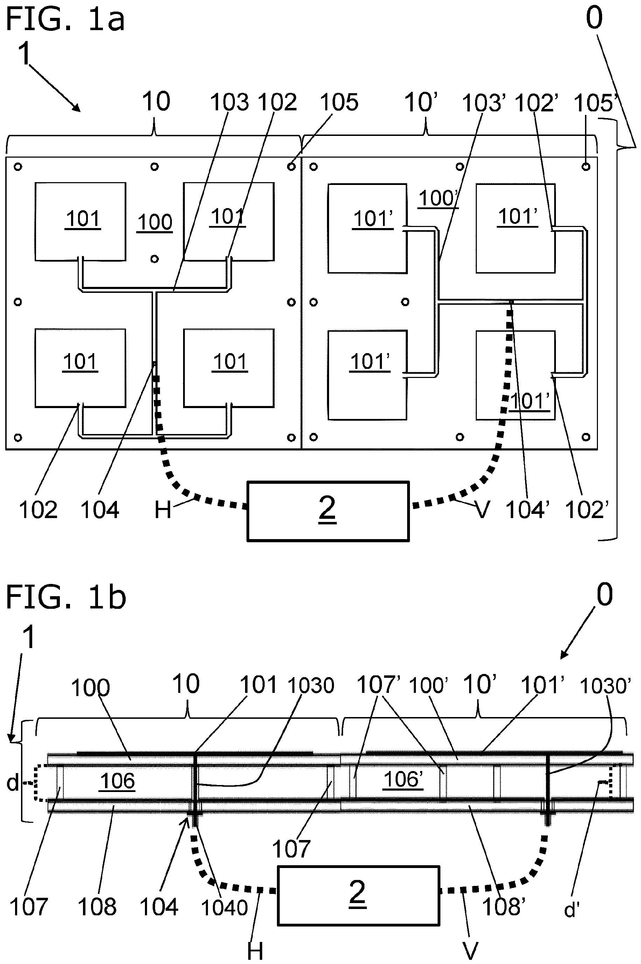

Particularly advantageous is a patch array antenna 1, comprising two patch arrays 10, 10' with identical setup as described above, wherein the patch arrays 10, 10' are rotated by 90° relative to each other. This is also shown in Figures 1, wherein symmetric antenna patterns are optimized for receiving horizonal and vertical linear polarizations. Due to alignment, one patch array 10 receives horizontal polarized microwaves H, while the second patch array 10' receives vertical polarized microwaves V and forwarding the corresponding signals H, V to the electronics 2. For all embodiments of the patch array antenna 1, the cabling between patch arrays 10, 10' and the electronics 2 is in particular a coaxial cable which can carry high frequency electrical signals with low losses. The impedances of patches 101, 101', inset-feeds 102, 102', striplines 103, 103', connector lines 1030, 1030', RF coaxial connector 104, 104' and cabling to the electronics must be matched.

Here the patch array antenna 1 utilizes at least one 2x2 patch array 10, 10' for each polarization providing fully independent polarization measurements. The advantage of using two separate patch arrays 10, 10' instead of array elements with two feeds is the very low cross-polarization leakage.

Compared with a dual fed patch array this design achieves superior cross-polarization isolation. Compared with a dual circularly polarized array, and mathematically converting into dual linear polarization, the invention does not require phase-coherent sampling, which is prone to IQ offset and phase drift. The horn antenna is the only type of comparable antenna that could provide efficiency comparable to that of the air-gapped patch array antenna 1 introduced here. But the horn antenna design is much too heavy to be used as part of a lightweight radiometer on an unmanned aerial vehicle (UAV).

By combining the two 2x2 patch arrays 10, 10', one rotated by 90 degrees, the invention receives two fully independent linear polarization views of the same ground footprint. Other antenna geometries don't have this luxury and either have significant polarization coupling and/or view different spots on the ground. The measured horizontal and vertical independent linear polarizations allow use of established soil-moisture retrievals techniques such as the Tau-Omega or Two-stream emission models. Other airborne radiometer systems, with inferior antennas, require sophisticated custom retrieval algorithms and assumptions about the two ground footprints, and without the established heritage and validation of the Tau-Omega soil-moisture retrieval algorithm. Of course more than four patches can be used per patch array pattern.

Our prototype of the two patch array 10, 10' antenna 1 had a size of 600mm x 300mm x 9mm with a total mass of about 1600g, when mounted to an aluminum supporting structure. The patch array antenna 1 has a 3dB full beamwidth (full width at half maximum) of 37 degrees, and an ohmic efficiency of 0.91.

In another embodiment the patch array antenna 1 can comprise two patch arrays 10, 10' which are sharing one patch substrate layer 100 and one ground conductor layer 108, wherein two pattern of patches 101, 101' are printed on the frontside surface of the same patch substrate layer 100, but rotated by 90° to each other. The other components like air gap 106, 106', spacers 107, 107', RF coaxial connectors 104, 104' are used as stated above. Patch, microstrip, and air-gap dimensions must be tuned by means of simulation to reach the desired resonant frequency and matching characteristics.

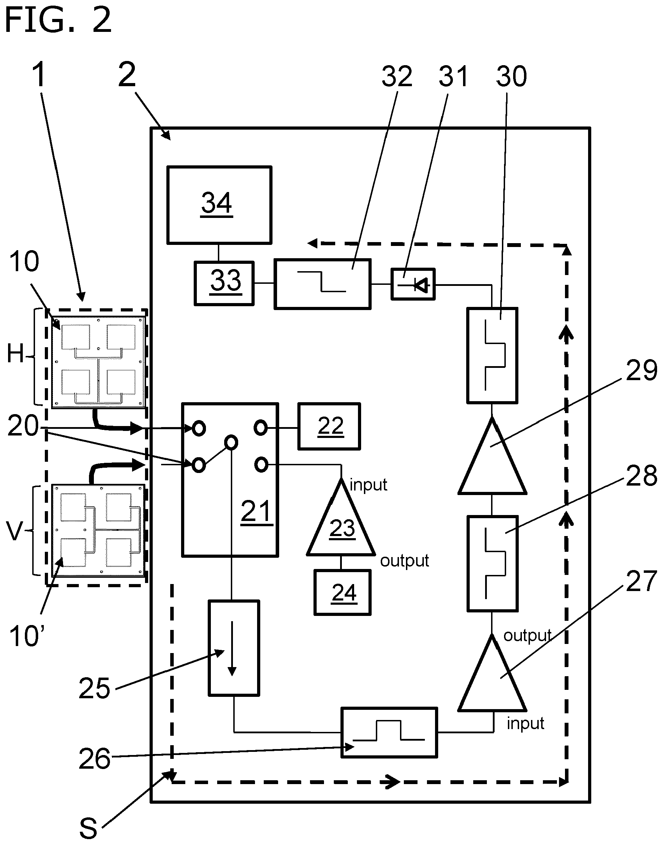

Received microwave thermal emission signals are very weak and need to be amplified for further signal processing. Frequent internal calibration is required to correct gain and offset drifts in time by the optimized electronics 2 as depicted in Figure 2 schematically. Gain drifts are correlated with offset drifts, which are both functions of temperature, and can both influence the resulting brightness temperature measurement and retrieval. Therefore also the electronics 2 was optimized, resulting in an electronics 2 as follows.

The radiometer electronics 2 comprises the following components in direction of signal transmission: Antenna inputs 20, n-port switch 21, calibration matched load 22, inverted LNA (low noise amplifier) and active cold load 23, with output terminated by a LNA termination 24, isolator 25, first bandpass filter 26 (especially for L-band, 1400-1427 MHz), first LNA 27, second bandpass filter 28, second LNA 29, third bandpass filter 30, square law power detector 31, lowpass filter 32, ADC (Analog to Digital Converter) 33 and computer unit 34. All components are in particular arranged in a housing. The inputs and outputs are indicated in the schematic drawing figure 2.

The calibration matched load 22 and/or inverted LNA and active cold load 23 with an LNA termination 24 are placed and connected to the n-port switch 21. The calibration matched load 22 is not in the main RF chain and acts only as an ambient brightness temperature source. The inverted LNA and active cold load 23 and the LNA termination 24 are not in the main RF chain and are optional. The LNA termination 24 is a passive electronic component, only to terminate the inverted LNA and cold load 23. This prevents reflections and non-linear behavior of the inverted LNA 23 that would change its apparent microwave brightness temperature.

In the antenna inputs 20, the signals of at least one antenna 1 are fed, most preferred from a two-part patch array antenna 1 as disclosed above. All components are adapted to the frequency range of interest, wherein some components are for temperature calibration tasks, as the calibration matched load 22 and the inverted LNA and cold load 23, terminated with the LNA termination 24.

The inverted LNA and cold load 23 is not actually used as an amplifier and is not in the main RF chain. Both components 23, 24 are not in the main RF chain and only act as a calibration cold brightness temperature source. Temperature sensors, for example thermocouples are not depicted here. For a person skilled in the art, it is known how the wiring and/or microwave transmission between the components is done and which technical requirements to be met by the components for the frequency range of interest. The whole radiometer electronics can be manufactured on one PCB using microstrip or CPW to attach the components.

The electronics 2 shows a simple direct-detect RF front-end with a square-law power detector 31 back-end. In contrast to the recent trend of digital sampling backends, this established and simple method was used in this design for the sake of simplicity, low-power consumption, and stability. Digital backends have been shown to provide mitigation to Radio Frequency Interference (RFI), but with a high sampling rate of the power detector we can also filter RFI in the time domain. The RF front-end is constructed using commercial components.

The RF front-end comprises: switch 21, in particular a four-port switch 21, isolator 25, inverted LNA 23, LNAs 27, 29 and L-band filters 26, 28, 30, and an integrating low-pass filter 32 as smoothing or integration RC filter on the DC output of the detector.

As bandpass filters 26, 28, 30 in particular ceramic cavity bandpass filters are used, for tuning to the passive-protected RF band/ theoretically free from radio-frequency interference.

The square-law power detector 31, whose output voltage is proportional to the square of the amplitude-modulated input voltage, is then low-pass filtered by lowpass filter 32 and sampled by the A/D converter 33 at ∼2 kHz. The lowpass filter 32 cutoff frequency or time constant is adjusted according to the A/D sample rate. The small computer unit 34 collects and saves the detector data and the optional temperature sensor data as well as controlling the switch.

The radiometer electronics 2 is nominally calibrated at ∼80 ms intervals using the two internal calibration loads 22, 23/24, an ambient temperature monitored matched load 22 and an active cold load 23/24. The physical temperature of the active cold load is also monitored, and its brightness temperature is characterized as a function of physical temperature using measurements of well characterized cold sky brightness temperature.

The components are chosen to deliver 50-Ω input impedance. For improved calibration, temperature sensors should be placed at the used antenna. In case of an above disclosed two-part patch array antenna 1, a temperature sensor should be located on each patch array 10, 10'.

The radiometer electronics 2 offers adjustable integration time and fast time domain sampling. For the UAV-borne radiometer, adjustable integration time allows for better radiometric accuracy for high flight altitude missions when spatial resolution is inherently lower, and vice-versa by sacrificing some radiometric accuracy. Extremely high spatial resolution is possible at low flight altitudes. For use as a ground based radiometer, integration time can be long resulting in low noise effective delta temperature (NEDT), or enhanced radiometric resolution.

Fast time domain sampling allows filtering of radio-frequency interference (RFI). As opposed to other designs, that use software defined radios (SDR) for filtering RFI in the frequency domain, the invention utilizes the theory of Gaussianity of noise in the time-domain to filter samples containing interference. Receivers using heterodyne or super-heterodyne detection, such as SDRs, are subject to uncertainty in the received frequency, and thus brightness temperature, from drifts in the temperature and power dependent local oscillator. The direct detection, with a front-end bandpass filter, used here provides a balance between simplicity and stability. The other designs discussed in the prior art above do not incorporate a front-end filter, which would allow RFI from a broad range of frequencies to saturate the first amplifier stage and compromise the measurements.

The resulting radiometer 0 is a direct detection, total-power, internally calibrated radiometer operating at the frequency band 1400-1426 MHz and has the following advantages due to the special antenna 1 design and/or the electronics 2 over the state-of-the-art are:
(a) direct detection radiometer receiver design with passive analog filtering as opposed to heterodyne or superheterodyne receivers, which cause local oscillator drift errors,
(b) full internal calibration with short and tunable calibration period (<300 ms),
(c) fully independent dual linear polarization measurement, and
(d) low-power consumption (<4 W) allows long-term operation with battery or photovoltaic power
(e) fast detector sampling rate allows for radiofrequency interference (RFI) filtering in time domain.

The total radiometer 0 provides advantages over the state-of-the-art because digital-backend detection with technologies such as software defined radios gather large amounts of data, require considerable processing time, and also consume more power than the design presented here. While digital detection allows filtering of RFI in the frequency domain, it is also subject to multiple additional noise sources including aliasing and frequency folding, local oscillator drift, phase error of in-phase and quadrature samples, etc.

### LIST OF REFERENCE NUMERALS

0 radiometer (compact, lightweight, optimized)
1 patch array antenna (in particular two part)
   10, 10' patch array
   100, 100' patch substrate layer (PCB, dielectric substrate)
   101, 101' patch (even number)
      pattern (symmetric)
   102, 102' inset-fed
   103, 103' striplines
      1030 connector line between striplines and 104
   104, 104' RF coaxial connector/SMA connector
      1040 coaxial center conductor
   105, 105' connection means (non-conducting screws, glue)
   106, 106' air gap
      d, d' distance (5 to 9 mm)
   107, 107' spacer (non conducting/ polymer/ PTFE/Nylon/Silicone)
   108,108' ground conductor layer
2 radiometer electronics
   20 Antenna inputs (one for horizontal/vertical polarization signal)
   21 n-port switch (in particular 4-port)
   22 calibration matched load (temperature calibration/50-Ω input impedance)
   23 inverted LNA (low noise amplifier) and active cold load
   24 LNA termination
   25 isolator
   26 first bandpass filter (1400-1427 MHz, L-band)
   27 first LNA (low noise amplifier)
   28 second bandpass filter (1400-1427 MHz, L-band)
   29 second LNA (low noise amplifier)
   30 third bandpass filter (1400-1427 MHz, L-band)
   31 square law power detector
   32 lowpass filter
   S signal direction
   33 ADC (Analog to Digital Converter)
   34 computer unit

## Claims

1. Portable stable low-mass microwave radiometer (0) for measuring microwaves in the spectral range between 1 and 300 GHz, comprising at least one patch array antenna (1) and a connected suitable electronics (2) with radio-frequency components and signal processing components,
**characterized in that**
the patch array antenna (1) comprises at least one patch array (10, 10') with a patch substrate layer (100, 100') of a dielectric material with a pattern of an even number of printed patches (101, 101') on a front side is printed, while printed patches (101, 101') are connected via inset-feds (102, 102') to striplines (103, 103'), wherein connector lines (1030) are connected to the striplines (103, 103') after feeding through the patch substrate layer (100, 100') through a ground conductor layer (108, 108'), which is fixed to the backside of the patch substrate layer (100, 100') in a defined distance (d, d') forming an air gap (106, 106') between both layer (100, 100', 108, 108') by a multiplicity of spacers (107, 107'), such that the connector lines (1030, 1030') are led through the ground conductor layer (108, 108') into RF coaxial connectors (104, 104') at a backside of the ground conductor layer (108, 108'), which are connected via cables with the radiometer electronics (2).

2. Portable stable low-mass microwave radiometer (0) according to claim 1, wherein the distances (d, d') between patch substrate layer (100, 100') and the ground conductor layer (108, 108') and thus the at least one air gap (106, 106') is between 5 and 9 mm.

3. Portable stable low-mass microwave radiometer (0) according to claim 1 or 2, wherein the spacers (107, 107') are made of electrically insulating materials, in particular polymers, most preferred made of silicone or Polytetrafluorethylen and are connected by connection means (105, 105') between patch substrate layer (100, 100') and ground conductor layer (108, 108').

4. Portable stable low-mass microwave radiometer (0) according to claim 3, wherein the connection means (105, 105') are electrically insulating materials, in particular screws of synthetic polymers like polyamides.

5. Portable stable low-mass microwave radiometer (0) according to one of the preceding claims, wherein the ground conductor layer (108, 108') is a printed circuit board with a grounding metal layer or a metal plate.

6. Portable stable low-mass microwave radiometer (0) according to one of the preceding claims, wherein the RF coaxial connectors (104, 104') are attached at the backside of the ground conductor layer (108, 108'), to be connected via the cables at the radiometer electronics (2).

7. Portable stable low-mass microwave radiometer (0) according to one of the preceding claims, wherein the patch array antenna (1) comprises two identically formed patch arrays (10, 10') with patch substrate layer (100, 100'), air gaps (106, 106') reached by multiplicities of spacers (107, 107') and ground conductor layer (108, 108'), wherein at least the patch substrate layer (100, 100') of the different patch arrays (10, 10') are rotated relative to each other in such a way that the patterns of the patches (101, 101') on the patch substrate layer (100, 100') are rotated 90° to each other, to enable the simultaneous measurement of differently polarized radiation.

8. Portable stable low-mass microwave radiometer (0) according to one of the preceding claims, wherein a temperature sensor is attached to the patch array (10, 10') and connected via cable to the electronics (2).

9. Portable stable low-mass microwave radiometer (0) according to one of the preceding claims, wherein a radiometer electronics (2) comprising the following components in direction of signal (S) transmission:
at least one antenna input (20), an n-port switch (21), an isolator (25), a first bandpass filter (26), a first low noise amplifier (27), a second bandpass filter (28), a second low noise amplifier (29), a third bandpass filter (30), a power detector (31), a lowpass filter (32), an Analog to Digital Converter (33) and a computer unit (34) is connected to the patch array antenna (1).

10. Portable stable low-mass microwave radiometer (0) for measuring microwaves in the spectral range between 1 and 300 GHz, comprising at least one patch array antenna (1) and a suitable electronics (2) connected with radio-frequency components and signal processing components,
**characterized in that**
the radiometer electronics (2) comprises the following components in direction of signal (S) transmission:
at least one antenna input (20), an n-port switch (21), an isolator (25), a first bandpass filter (26), a first low noise amplifier (27), a second bandpass filter (28), a second low noise amplifier (29), a third bandpass filter (30), a power detector (31), a lowpass filter (32), an Analog to Digital Converter (33) and a computer unit (34).

11. Portable stable low-mass microwave radiometer (0) according to claim 10, wherein to the n-port switch (21) a first matched load (22) and/or an inverted LNA and active cold load (23) with an LNA termination (24) are placed and connected.

12. Portable stable low-mass microwave radiometer (0) according to one of the claims 10 or 11, wherein the power detector (31) is a square law power detector (31).

13. Portable stable low-mass microwave radiometer (0) according to one of the claims 11 or 12, wherein the first matched load (22) and the active cold calibration source (23) are equipped with temperature sensors for calibration purpose.

14. Portable stable low-mass microwave radiometer (0) according to one of the claims 10 to 13, wherein two antenna inputs (20) for two patch antennas (1) or two patch arrays (10, 10') are provided at the electronics (2) and the n-port switch (21) is a four port switch (21).

15. Portable stable low-mass microwave radiometer (0) according to claim 11, wherein a temperature sensor is attached to each patch array (10, 10') and/or to the first calibration matched load (22) and/or to the inverted LNA and active cold load (23) for calibration purpose.
